## Europäisches Patentamt

**European Patent Office**

**Office européen des brevets**

(11) Numéro de publication: **0 063 990**
**B1**

(12) # FASCICULE DE BREVET EUROPEEN

(45) Date de publication du fascicule du brevet:
**13.11.85**

(51) Int. Cl.⁴: **H 04 N 7/13**, H 04 N 1/41

(21) Numéro de dépôt: **82400657.1**

(22) Date de dépôt: **09.04.82**

(54) **Procédé de transmission d'une image à débit réduit; système de transmission pour la mise en oeuvre de ce procédé.**

(30) Priorité: **14.04.81 FR 8107458**

(43) Date de publication de la demande:
**03.11.82 Bulletin 82/44**

(45) Mention de la délivrance du brevet:
**13.11.85 Bulletin 85/46**

(84) Etats contractants désignés:
**DE GB**

(73) Titulaire: **THOMSON-CSF, 173, Boulevard Haussmann, F-75379 Paris Cedex 08 (FR)**

(72) Inventeur: **Richard, Christian, THOMSON-CSF SCPI 173, bld Haussmann, F-75360 Paris Cedex 08 (FR)**
Inventeur: **Catros, Jean-Yves, THOMSON-CSF SCPI 173, bld Haussmann, F-75360 Paris Cedex 08 (FR)**

(74) Mandataire: **Turlèque, Clotilde et al, THOMSON-CSF SCPI 173, Bld Haussmann, F-75379 Paris Cedex 08 (FR)**

(56) Documents cités:
FR - A - 2 143 960
FR - A - 2 277 482
US - A - 4 217 609

TECHNISCHE MITTEILUNGEN PTT, vol.54, no.12, 1976, Schweizerische Post-Telephon- und Telegraphenbetriebe, Bern (CH) A. KÜNDIG: "Ein experimentelles Endgerät für die Sprach- und Bildübertragung in PCM-Netzen" pages 456-474
PROCEEDINGS OF THE IEEE, vol.68, no.7, juillet 1980, IEEE, New York (US) Y. YASUDA et al.. "Data compression for check processing machines", pages 874-885
NTG-FACHBERICHTE OF THE INTERNATIONAL SYMPOSIUM ON SUBSCRIBER LOOPS AND SERVICES (I.S.S.L.S.), 15-19 septembre 1980, Munich, VDE-Verlag GmbH, vol.73, Berlin (DE) Y. KATAGIRI et al.: "A digital

(56) Documents cités: (suite)
video telephone subscriber set with 64 kbit/s transmission rate", pages 167-171
INTERNATIONALE ELEKTRONISCHE RUNDSCHAU, vol.27, no.1, janvier 1973, Berlin (DE) H.WENDT: "Interframe-Codierung für Videosignale" pages 2-7
IEEE INTERNATIONAL CONVENTION DIGEST, (Synopses of Papers Presented at the "1971 International Convention"), 22-25 mars 1971, New York, The Institute of Electrical and Electronics Engineers, Inc., New York (US) L.H. ENLOE: "Interframe coding for videotelephony: Tutorial", pages 334-335
IEEE TRANSACTIONS ON COMMUNICATION TECHNOLOGY, vol.COM-19, no.6, décembre 1971, New York (US) R.J. ARGUELLO et al.: "The effect of channel errors in the differential pulse-code-modulation transmission of sampled imagery", pages 926-933

## Description

La présente invention concerne les procédés de transmission d'images à débit réduit, ainsi que les systèmes de transmission pour la mise en œuvre de ce procédé. Il concerne plus spécialement les images analysées en deux trames.

Un tel procédé est destiné à transmettre avec une excellente qualité une image fixe en un temps très court, ou bien une image animée, constituée d'une succession d'images par exemple vingt-cinq par seconde, telles que les images de télévision. La restitution d'une image de grande qualité nécessite la transmission d'une quantité d'informations importante, soit par une voie à fort débit et pendant un temps court, soit par une voie à faible débit mais pendant un temps long. Une faible durée de transmission est souhaitable pour transmettre des images fixes, et elle est indispensable pour transmettre des images animées aux fréquences standards en télévision. Quand le débit des voies de transmission est faible il oblige à recourir à des procédés de compression d'informations, pour que la durée de transmission soit écourtée. Ces procédés utilisent la redondance des informations contenues dans les images. Ils consistent à ne coder et ne transmettre qu'une partie des informations; puis à reconstituer, à la réception, les informations manquantes en les déduisant de celles qui ont été transmises. Le puls couramment, les systèmes de compression d'images utilisent un codage différentiel. Soit $X_n$ la valeur numérique de la luminance du point d'indice n sur la ligne considérée. Soit $X'_n$ la valeur numérique de la luminance du point d'indice n sur la ligne précédente. Celle-ci appartient à l'autre trame de la même image quand celle-ci est décomposée en deux trames. Le codage différentiel consiste à calculer la valeur algébrique $d_n = X_n - P_n$ où $P_n$ est une valeur numérique calculée appelée »prédiction«. La valeur $d_n$ est transmise, après codage selon une table permettant de réduire le nombre de bits à transmettre. A la réception, pour reconstituer la valeur $X_n$ de la luminance, à partir de la valeur transmise $d_n$ il faut lui additionner la même valeur de prédiction $P_n$

$$\hat{X}_n = d_n + P_n$$

Pour calculer la prédiction $P_n$, il y a plusieurs procédés possibles. Ils sont définis ci-dessous, dans le cas d'une image composée de deux trames.

La »prédiction spatiale unidimensionnelle« consiste à calculer $P_n$ à partir des valeurs numériques codées-décodées $\hat{X}_{n-1}$, $\hat{X}_{n-2}$, $\hat{X}_{n-3}$, etc . . . de la luminance des points voisins du point d'indice n et appartenant à la même ligne. Par exemple $P_n = \hat{X}_{n-1}$.

La »prédiction spatiable bi-dimensionnelle« consiste à calculer $P_n$ à partir de $\hat{X}_{n-1}$, $\hat{X}_{n-2}$, $\hat{X}_{n-3}$, etc . . . mais aussi à partir de $\hat{X}''_{n-1}$, $\hat{X}''_n$, $\hat{X}''_{n+1}$, etc . . . valeurs numériques codées-décodées de la luminance des points voisins situés sur la ligne au-dessus dans la même trame, c'est-à-dire non immédiatement voisine.

$$\text{Par exemple: } P_n = \frac{\hat{X}''_{n+1} + \hat{X}_{n-1}}{2}.$$

La »prédiction temporelle intertrames« consiste à calculer $P_n$ à partir de $\hat{X}_{n-1}$, $\hat{X}_{n-2}$, $\hat{X}_{n-3}$, etc . . . mais aussi à partir de $\hat{X}'_{n-1}$, $\hat{X}'_n$, $\hat{X}'_{n+1}$, etc . . . valeurs numériques codées-décodées de la luminance des points situés sur la ligne immédiatement au-dessus et appartenant à une autre trame de la même image ou de l'image précédente.

$$\text{Par exemple: } P_n = \frac{\hat{X}_{n-1} + \hat{X}'_{n+1}}{2}.$$

A qualité égale, la prédiction temporelle intertrames nécessite un débit d'informations moins élevé que les prédictions spatiales car la corrélation est plus grande entre les points homologues de deux trames qu'entre les points voisins d'une même ligne, ou d'une même trame. Ce type de prédiction est meilleur mais nécessite une initalisation du processus. Quand la transmission de la première trame commence les valeurs $\hat{X}'_{n-1}$, $\hat{X}'_n$, $\hat{X}'_{n+1}$ n'existent pas. La première trame ne peut pas être codée et décodée. Pour transmettre des images fixes l'art antérieur se borne à utiliser une prédiction spatiale. Pour transmettre des images animées il réalise le codage différentiel à prédiction temporelle de la première trame d'une image, en prenant comme trame de référence l'une ou les deux trames de l'image précédente. Les erreurs de codage sont importantes s'il y a peu ou pas de corrélation entre deux images successives.

Certains procédés connus visent à réduire l'effet des erreurs de transmission sur une suite de valeurs de luminance codée différentiellement, au moyen d'un changement périodique du type de codage:

ROGER J. ARGUELLO décrit, dans IEEE TRANSACTIONS ON COMMUNICATIONS TECHNOLOGY, vol-COM 19, n° 16, décembre 1971, un procédé pour réduire l'effet des erreurs de transmission sur une image dont les valeurs de luminance sont codées et transmises par une modulation à impulsions codées différentiellement (DPCM). Ce procédé consiste à remplacer périodiquement, le codage

**0 063 990**

différentiel par un codage en valeur absolue (PCM). Ainsi chaque erreur de transmission n'affecte qu'une portion d'image, au plus égale à la portion d'image correspondant à la période du changement de codage. Dans les exemples d'images qui sont donnés, la période correspond à une portion d'image de 26 à 104 éléments.

L. H. ENLOE décrit, dans IEEE INTERNATIONAL CONVENTION DIGEST 1971, un procédé de codage d'images, pour le visiophone, mettant en œuvre principalement une modulation par impulsions codées différentiellement (DPCM), mais celle-ci est remplacée périodiquement par une modulation à impulsions codées en valeur absolue (PCM), pour arrêter la propagation des erreurs dues à la transmission. Si une image est fixe pendant trois secondes, toutes les valeurs de luminance de cette image, sont transmises en valeur absolue, ce qui signifie que la période du changement de codage correspond à une portion d'image inférieure à une image, et que ce ne sont pas toujours les mêmes éléments d'images qui sont codés en valeur absolue.

Ces articles ne considèrent pas la transmission d'images par codage différentiel entre les 2 trames d'une même image. Le changement de codage qu'ils préconisent pour certains points ne s'applique pas systématiquement aux points de la première ligne d'image, donc ils ne résolvent pas le problème d'initialisation posé par le codage différentiel entre 2 trames d'une même image.

Le problème de l'initialisation peut être résolu par divers procédés qui augmentent considérablement, soit le débit, soit la durée de la transmission. Par exemple un procédé consisterait à transmettre pour chaque image, la première trame avec une prédiction spatiale puis, la deuxième trame avec une prédiction temporelle. La quantité d'informations serait plus grande que si les deux trames étaient transmises avec une prédiction temporelle. En outre l'entrelacement des deux trames codées différemment mettrait en évidence, par contraste, les défauts dus, d'une part à la prédiction spatiale, d'autre part ceux dus à la prédiction temporelle, ce qui se traduirait par une diminution de la qualité de l'image.

L'objet de l'invention est deux procédés permettant de réaliser la transmission par des moyens simples et sans les inconvénients connus dans l'art antérieur.

Selon l'invention, un premier procédé de transmission d'une image à débit réduit, consiste à analyser l'image en deux trames, puis à numériser, coder et transmettre chaque valeur de luminance, chaque valeur étant codée par un codage différentiel avec une prédiction dite temporelle intertrames, qui consiste à coder la valeur numérique de la luminance d'un point courant à partir de celle des points voisins appartenant à la même ligne d'une part, et des points voisins appartenant à la ligne immédiatement précédente de l'autre trame de la même image d'autre part; à la réception, chaque valeur étant décodée selon le procédé complémentaire du codage différentiel intertrames, et une image étant visualisée en fonction des valeurs décodées ainsi obtenues, et est caractérisé en ce que, pour initialiser le codage et le décodage des valeurs de luminance de chaque image, un codage et un décodage différentiel avec une prédiction dite spatiale sont utilisés pour une ou plusieurs lignes au début de chaque image, ce codage consistant à coder la valeur de la luminance d'un point à partir de celle des points précédents sur la même ligne.

Selon l'invention, un second procédé de transmission d'une image à débit réduit, consiste à analyser l'image en deux trames, puis à numériser, coder et transmettre chaque de luminance, les valeurs transmises étant codées par un codage différentiel avec une prédiction dite temporelle intertrames, qui consiste à coder la valeur numérique de la luminance d'un point courant à partir de celle des points voisins appartenant à la même ligne d'une part, et des points voisins appartenant à la ligne immédiatement précédente de l'autre trame de la même image d'autre part; à la réception, les valeurs de luminance étant décodées selon le procédé complémentaire du codage différentiel intertrames, et une image étant visualisée en fonction des valeurs décodées ainsi obtenues; et est caractérisé en ce que le codage et le décodage des valeurs de luminance de la première ligne de chaque image sont initialisés par une suite prédéterminée de valeurs de luminance, correspondant à une ligne de luminance moyenne, et qui n'est pas transmise.

Selon l'invention, il est également prévu un système de transmission d'images mettant en œuvre ce procédé.

L'invention sera mieux comprise et d'autres caractéristiques apparaîtront à l'aide de la description ci-après et des figures s'y rapportant:

La figure 1 est le schéma synoptique d'un exemple de réalisation du système de transmission d'images suivant l'invention.

La figure 2 est le schéma synoptique des moyens de compression et d'expansion d'informations, utilisés dans l'exemple de réalisation donné pour le transmetteur.

La figure 3 est le schéma synoptique des moyens d'expansion d'informations utilisés dans l'exemple de réalisation donné pour le récepteur.

La figure 4 est le schéma synoptique d'un exemple de réalisation des moyens de calcul de prédiction dans le transmetteur ou le récepteur d'images, selon l'invention.

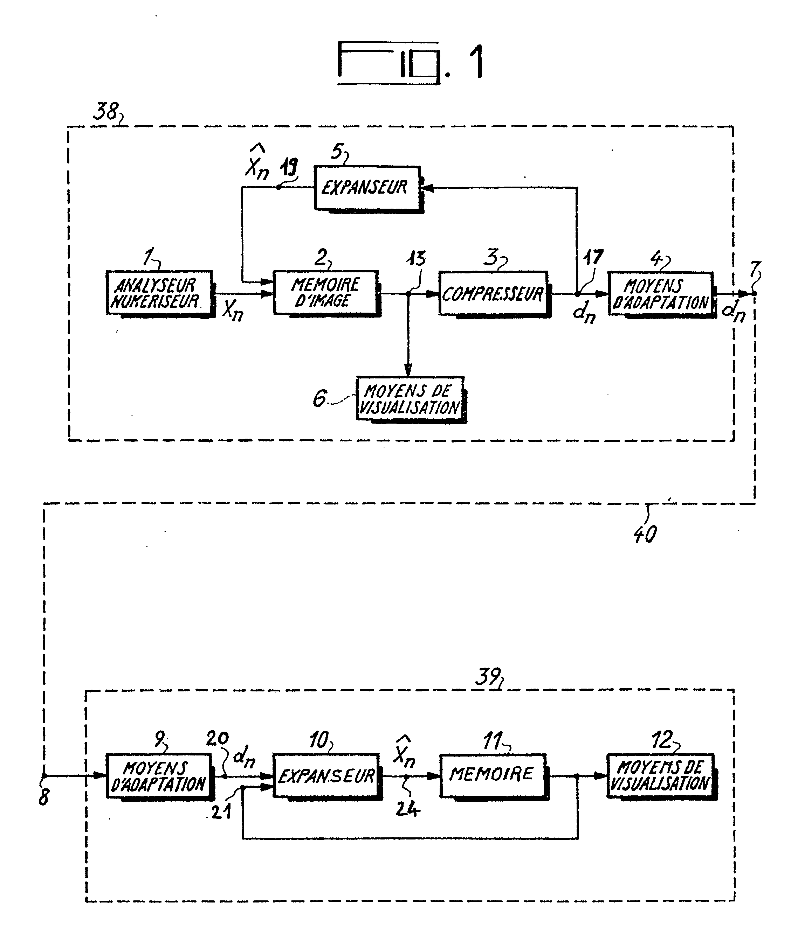

Sur la figure 1, le système de transmission comporte un dispositif transmetteur 38 relié à un dispositif récepteur 39 par une ligne de transmission 40. Dans le transmetteur, 38, une image à transmettre est analysée en deux trames par un analyseur-numériseur d'images 1. Par exemple l'analyse est faite au moyen d'une caméra de télévision. Un point, d'indice n, est caractérisé par la valeur

3

numérique $X_n$ de sa luminance. La sortie de l'analyseur-numériseur d'images 1 alimente une mémoire 2, appelée mémoire d'image. Celle-ci stocke les valeurs de luminance de tous les points d'une image (deux trames). Ces valeurs subissent ensuite un codage différentiel. Le codage et la transmission sont faits ligne par ligne sans tenir compte des trames.

La sortie de données, de la mémoire d'image 2, est reliée d'une part à une borne d'entrée 13 d'un compresseur d'informations 3 et à une entrée de moyens de visualisation 6. Le compresseur d'informations 3 code la valeur $X_n$, lue dans la mémoire d'image. Le procédé de codage sera décrit plus loin. Soit $d_n$ la valeur codée correspondante. Celle-ci est transmise par une borne de sortie 17 du compresseur 3 à une entrée de moyens 4 d'adaptation à la ligne, et à l'entrée d'un expanseur d'informations 5, complémentaire du compresseur 3. Il décode la valeur numérique $d_n$ et fournit une valeur numérique $\hat{X}_n$ sur une borne de sortie 19, qui est reliée à une entrée de données de la mémoire d'image 2. La valeur $\hat{X}_n$ est écrite dans la mémoire 2 à la place de $X_n$. Elle est lue et utilisée ultérieurement par le compresseur 3 pour coder la valeur numérique d'autres points. Par exemple, pour coder la valeur $X_n$ le compresseur d'informations 3 utilise les valeurs codées-décodées $\hat{X}'_{n-1}$, $\hat{X}'_n$, $\hat{X}'_{n+1}$, et $\hat{X}_{n-1}$, $\hat{X}_{n-2}$, $\hat{X}_{n-3}$.

En effet, la valeur de la prédiction $P_n$ est calculée à partir des valeurs codées-décodées de la luminance des points voisins du point considéré. A cause des erreurs dues au codage-décodage elles diffèrent un peu des valeurs d'origine. Le calcul de $P_n$, à l'émission, se fait à partir des valeurs codées-décodées et non à partir des valeurs d'origine, de façon à avoir, à l'émission et à la réception, la même valeur $P_n$, donc éviter une cause d'erreurs supplémentaire. La sortie de la mémoire 2 fournit donc à l'entrée du compresseur 3, d'une part, des valeurs à coder et, d'autre part, des valeurs codées-décodées précédemment. Pour le traitement du point d'indice n, par exemple, une première lecture dans la mémoire d'image 2 fournit la valeur codée-décodée $\hat{X}_{n-1}$ puis une deuxième lecture fournit la valeur à coder $\hat{X}_n$. La valeur $\hat{X}_{n-1}$ est stockée dans le compresseur 3 pour être utilisée ultérieurement. A l'instant où la prédiction $P_n$ est calculée, les valeurs codées-décodées utilisées pour ce calcul sont, dans cet exemple: $\hat{X}'_{n-1}$, $\hat{X}'_n$, $\hat{X}'_{n-1}$ et $\hat{X}_{n-1}$, $\hat{X}_{n-2}$, $\hat{X}_{n-3}$, qui ont été stockées dans le compresseur 3 au cours du traitement des valeurs précédant $\hat{X}_n$.

D'autre part, le stockage des valeurs codées-décodées $\hat{X}_n$ dans la mémoire d'image permet de visualiser l'image telle qu'elle sera à la sortie du dispositif récepteur. Dans ce but, la mémoire d'image 2 est lue et les valeurs codées-décodées sont transmises aux moyens de visualisation 6, constitués par exemple d'un moniteur de télévision.

La vitesse d'analyse de l'image, qui correspond à la vitesse d'écriture dans la mémoire d'image 2, la cadence de codage et de transmission, qui correspond à une première vitesse de lecture dans la mémoire d'image 2, et la vitesse de visualisation, qui correspond à une deuxième vitesse de lecture dans la mémoire d'image 2, sont indépendantes grâce à la capacité de la mémoire 2, permettant de stocker une image complète. La vitesse de transmission peut être beaucoup plus lente que la vitesse d'analyse.

La sortie 7 du dispositif transmetteur est reliée à l'entrée d'une ligne de transmission 40. L'autre extrémité de cette ligne est connectée à la borne d'entrée 8 du dispositif récepteur. Des moyens 9 d'adaptation à la ligne transmettent la valeur numérique codée $d_n$ à une borne d'entrée 20 d'un expanseur d'informations 10 qui fonctionne comme l'expanseur 5 du dispositif émetteur. La valeur numérique fournie sur sa borne de sortie 24 est donc $\hat{X}_n$. Celle-ci est écrite dans une mémoire 11, dite mémoire d'image. Elle est lue d'une part par l'expanseur 10, pour décoder les valeurs numérique d'autres points de l'image, et d'autre part par des moyens de visualisation 12, pour restituer l'image. Ces moyens 12 sont par exemple un moniteur de télévision. La vitesse d'écriture des valeurs décodées dans la mémoire 11, et la vitesse de lecture pour la visualisation peuvent être différentes, car une image complète est stockée dans la mémoire d'image 11, dans cet exemple de réalisation.

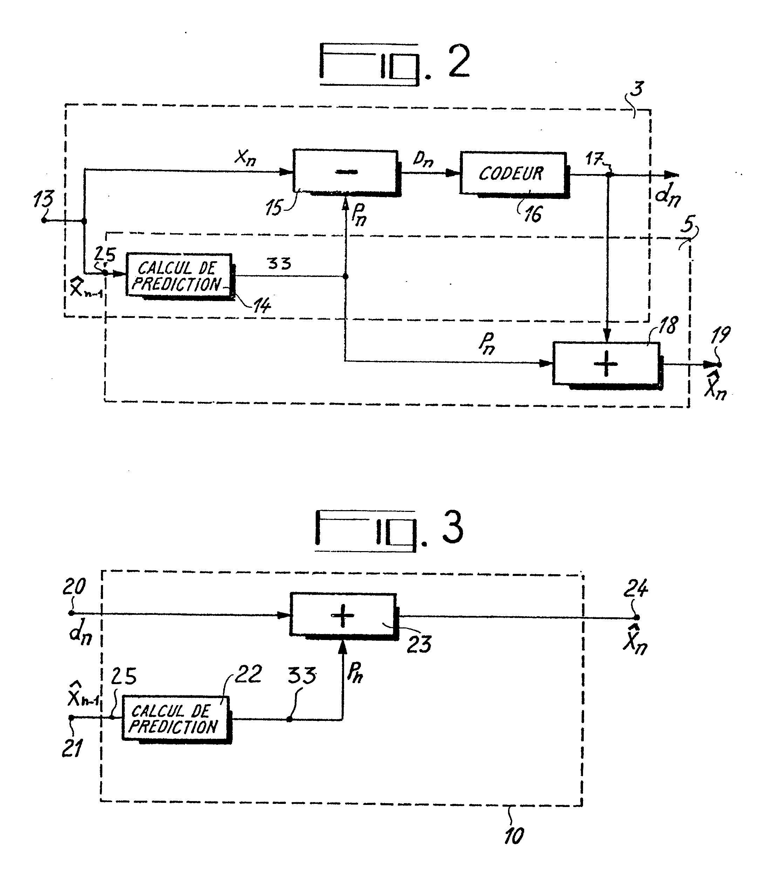

La figure 2 représente le compresseur d'informations 3 et l'expanseur d'informations 5 utilisés dans l'exemple de réalisation de transmetteur d'images décrit précédemment. A l'instant où est codée la valeur $X_n$, la borne 13 fournit d'abord la valeur codée-décodée $\hat{X}_{n-1}$ puis la valeur à coder $X_n$, lues dans la mémoire d'image 2. $\hat{X}_{n-1}$ est appliquée à une borne d'entrée 25 de moyens de calcul de prédiction 14, où elle est mémorisée. $X_n$ est fournie à la première des entrées d'un soustracteur 15. Une valeur numérique $P_n$, la prédiction, est appliquée sur l'autre entrée du soustracteur 15. Elle est générée par les moyens de calcul 14 dont la borne d'entrée 25 est reliée à la borne d'entrée 13 des moyens de compression 3. La sortie du soustracteur 15 fournit une valeur numérique $D_n$ au codeur 16 qui lui fait correspondre une valeur numérique $d_n$, selon une table choisie de telle sorte que la transmission des valeurs $d_n$ nécessite moins de bits que la transmission des valeurs $D_n$. La sortie du codeur 16 est reliée à la borne de sortie 17 du compresseur d'informations 3. L'expanseur d'informations 5 est constitué d'une par les moyens de calcul 14 utilisés par le compresseur 3, et d'autre part d'un additionneur 18 réalisant la somme des valeurs numériques $d_n$ et $P_n$; $d_n$ provient de la borne de sortie 17 du compresseur 3. La borne de sortie de l'expanseur 5 est constituée par la borne de sortie 19 de l'additionneur 18. Elle fournit $\hat{X}_n$, valeur numérique codée-décodée correspondant à $X_n$. Elle est identique à celle obtenue dans le dispositif récepteur d'images, parce que celui-ci comporte un expanseur d'informations 10 dont le fonctionnement est analogue.

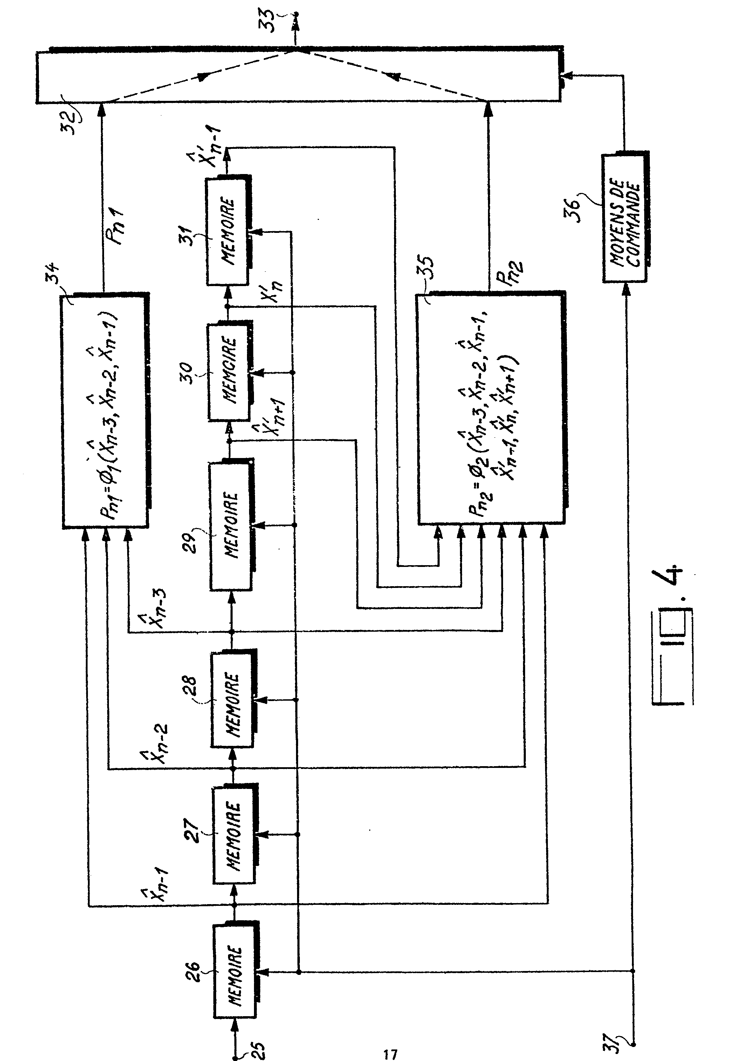

La figure 3 représente le schéma synoptique de l'expanseur d'informations 10, utilisé dans le dispositif récepteur d'images. La valeur numérique $d_n$ reçue par la borne d'entrée 20 est transmise à la première entrée d'un additionneur 23. La deuxième entrée de l'additionneur 23 reçoit une valeur numérique $P_n$, appelée prédiction. Elle est générée par les moyens de calcul de prédiction 22, fonctionnant de manière analogue aux moyens de calcul 14 du dispositif émetteur. Au moment du décodage de la valeur $d_n$, par exemple, ils reçoivent, par une borne d'entrée 21 de l'expanseur, la valeur $\hat{X}_{n-1}$ décodée antérieurement et stockée dans la mémoire d'image 11. La borne de sortie 24 de l'additionneur 23 constitue la sortie de l'expanseur 10.

Le dispositif transmetteur et le dispositif récepteur selon l'invention mettent en œuvre un calcul de prédiction selon l'une ou l'autre des variantes suivantes:

Dans la première variante toutes les lignes sont codées et décodées avec une prédiction temporelle intertrames, et l'initialisation est faite en utilisant des valeurs numériques connues de l'émetteur et du récepteur, et qui correspondraient à une ligne supplémentaire, dont la luminance serait de niveau gris moyen. Ces valeurs numériques remplacent $\hat{X}'_{n-1}$, $\hat{X}'_n$, $\hat{X}_{n+1}$ dans les calculs de prédiction (temporelle) de la première ligne d'image. Elles causent une erreur, généralement importante, sur les valeurs décodées de la première ligne. Celle-ci est déjà plus précise qu'une ligne grise pour calculer les prédictions de la deuxième ligne d'image, etc . . . Le processus converge vers un régime de fonctionnement où l'erreur due à l'initialisation n'intervient plus.

Dans la deuxième variante, toutes les lignes de l'image sont codées et décodées avec une prédiction temporelle intertrames, sauf une ou quelques unes au début de l'image, qui sont codées et décodées avec une prédiction spatiale unidimensionnelle, qui ne nécessite pas d'initialisation (sauf pour le premier point mais celui-ci est négligeable). Les moyens de calcul de prédiction, de l'émetteur et du récepteur génèrent tour à tour les deux types de prédiction.

La première variante a pour avantage la simplicité, mais les premières lignes de l'image peuvent être de qualité médiocre à cause de l'erreur commise en initialisant par des lignes de luminance moyenne au lieu des valeurs exactes nécessaires pour calculer une prédiction temporelle exacte.

La deuxième variante a pour avantage de fournir, dès la première ligne, une bonne qualité d'image. Ceci se paie d'une complexité plus grande puisqu'il faut générer deux types de prédiction. Dans les deux cas il est à la protée de l'homme de l'art d'utiliser plusieurs lignes d'initialisation, au lieu d'une, afin de diminuer les erreurs de codage en début d'image.

La figure 4 représente le schéma synoptique d'un exemple de réalisation des moyens de calcul de prédiction 14 et 22 dans les cas de la deuxième variante. La borne d'entrée 25 est connectée à une série de mémoires 26 à 31. Ces mémoires sont montées en cascade et leur commande de lecture-écriture est réalisée par un signal d'horloge appliqué à la borne d'entrée 37, qui reçoit une impulsion pour chaque point traité. A chaque impulsion d'horloge le contenu des mémoires est transféré à la mémoire voisine, de telle sorte que lorsque la valeur $d_n$ va être décodée, la valeur $\hat{X}_{n-1}$ est présente à la sortie de la mémoire 26, $\hat{X}_{n-2}$ est présente en sortie de la mémoire 27, $\hat{X}_{n-3}$ est présente en sortie de la mémoire 28, $\hat{X}'_{n+1}$ est présente en sortie de la mémoire 29, $\hat{X}'_n$ est présente en sortie de la mémoire 30, $\hat{X}'_{n-1}$ est présente en sortie de la mémoire 31. Si N est le nombre de points d'une ligne, la mémoire 29 a une capacité de N-2 valeurs numériques. Les autres mémoires ont chacune une capacité d'une valeur numérique. La mémoire 26 joue le rôle de tampon pour stocker la valeur $\hat{X}_{n-1}$ lue dans la mémoire 11, les mémoires 27 à 31 retardent ensuite cette valeur pour qu'elle soit disponible pour les calculs de prédiction ultérieurs. La capacité de l'ensemble des mémoires 26 à 31 correspond à environ une ligne d'image. Grâce à elles il n'est pas nécessaire de faire de nombreuses lectures dans la mémoire d'image pour obtenir les valeurs $\hat{X}'_{n-1}$, $\hat{X}'_n$, $\hat{X}'_{n+1}$, $\hat{X}_{n-2}$, $\hat{X}_{n-3}$.

La borne de sortie de chacune des mémoires 26, 27 et 28 est reliée aux entrées de moyens de calcul 34, qui déterminent une prédiction spatiale unidimensionnelle:

$$P_{n1} = \Phi_1 (\hat{X}_{n-3}, \hat{X}_{n-2}, \hat{X}_{n-1})$$

La borne de sortie des mémoires 26 à 31 est reliée aux entrées des moyens de calcul 35 qui déterminent une prédiction temporelle intertrames:

$$P_{n2} = \Phi_2 (\hat{X}_{n-3}, \hat{X}_{n-2}, \hat{X}_{n-1}, \hat{X}'_{n-1}, \hat{X}'_n, \hat{X}'_{n+1})$$

La sortie de chacun des moyens de calcul 34 et 35 est reliée à une des entrées de moyens de multiplexage 32. Ceux-ci transmettent vers la borne de sortie 33 des moyens de calcul de prédiction, la valeur numérique $P_{n1}$ ou $P_{n2}$, selon la commande logique fournie par les moyens de commande 36. Ceux-ci sont reliés à la borne d'entrée d'horloge 37. Ils comptent les impulsions d'horloge pour générer un signal logique, haut par exemple, quand la prédiction concerne un point d'une ligne d'initialisation, et bas, quand la prédiction concerne un point d'une des autres lignes de l'image transmise. Dans le premier cas c'est la prédiction spatiale qui est acheminée vers la borne de sortie 33. Dans le deuxième cas c'est la prédiction temporelle.

Quelle que soit la variante mise en œuvre pour l'initialisation de la transmission, la quasi-totalité de l'image est transmise avec le même procédé de codage différentiel avec prédiction temporelle intertrames. En outre, le codage d'une image est totalement indépendant de l'image précédente, grâce au stockage des deux trames dans la mémoire d'image, contrairement à certains procédés de

**0 063 990**

l'art antérieur, où la ligne précédente, servant de référence, peut appartenir à l'image précédente. D'autre part la transmission peut se faire à une vitesse indépendante de la vitesse d'analyse et de la vitesse de visualisation, grâce au stockage d'une image complète. Le tableau ci-dessous compare les résultats obtenus avec deux procédés connus.

| Procédé | PCM (pas de compression) | DPCM (codage différentiel prédiction spatiale) | Procédé selon l'invention |
|---|---|---|---|
| nombre de lignes | 1064 | 1064 | 1064 |
| nombre de points par ligne | 1024 | 1024 | 1024 |
| nombre de bits de luminance | 6 | 3 | 2 |
| nombre de bits de chrominance | 6 | 3 | 2 |
| nombre total d'éléments binaires | 13,074 Mbits | 6,537 Mbits | 4,358 Mbits |
| temps de transmission (une image) | 6,8 s | 3,4 s | 2,3 s |

Il est à noter qu'une variante de réalisation du dispositif expanseur 5 peut consister à fournir la valeur codée-décodée $\hat{X}_{n-1}$, non par une lecture dans la mémoire d'image 2, mais en raccordant la borne 25 à la borne de sortie 19 de l'expanseur 5. Juste avant le codage de $X_n$, la valeur $\hat{X}_{n-1}$ y est disponible. Le stockage des valeurs codées-décodées $\hat{X}_n$ reste néanmoins nécessaire pour per permettre une visualisation par les moyens 6, si ceux-ci ont une cadence de visualisation différente de la cadence de codage-décodage.

La même variante peut être réalisée pour l'expanseur 10.

Deux variantes du système selon l'invention concernent respectivement les domaines de la télécopie et de la télévision.

En télécopie ce procédé permet de transmettre des images d'excellente qualité en quelques secondes. L'image est analysée, par exemple, par une caméra de télévision classique. Le dispositif récepteur 39 comporte des moyens de visualisation 12 dont la vitesse de fonctionnement est identique à la vitesse de transmission des informations sur la ligne 40, et qui reconstituent l'image sans la décomposer en deux trames. Ces moyens peuvent être constitués par une imprimante classique de télécopieur. Dans ce cas la mémoire d'image 11 peut être remplacée par une mémoire à décalage, de capacité beaucoup plus faible que la mémoire d'image. Si, par exemple, la prédiction temporelle intertrames est fonction de $\hat{X}'_{n-1}$, $\hat{X}'_n$, $\hat{X}'_{N+1}$ et si une ligne d'image comporte N points, la mémoire 11 a une capacité de N + 2 valeurs de luminance. Elle reçoit sur une entrée la valeur de luminance codée-décodée $\hat{X}_n$ fournie par l'expanseur 10. Si les valeurs de la prédiction sont fonctions, par exemple, de $\hat{X}_{n-1}$, $\hat{X}'_{n-1}$, $\hat{X}'_n$, $\hat{X}'_{n+1}$ la mémoire comporte quatre sorties fournissant ces valeurs à l'expanseur 10. L'entrée d'horloge de la mémoire 11 reçoit un signal de fréquence égale à la cadence de la transmission. Les moyens de visualisation 12 peuvent être alimentés directement par la sortie de l'expanseur 10, ou bien par une des sorties de la mémoire 11. Il est à la portée de l'homme de l'art de réaliser la mémoire 11 et les mémoires 26 à 31 avec un seul ensemble de mémoires.

En télévision le procédé selon l'invention peut être utilisé pour réaliser une transmission à débit réduit, en appliquant ce procédé successivement à chaque image de la séquence à transmettre. Chaque image est ainsi codée indépendamment des précédentes.

Le temps séparant deux images successives étant très inférieur à la durée d'analyse d'une image il est nécessaire d'imbriquer les opérations de codage, ou de décodage, de deux images successives; à un instant donné, la mémoire d'image 2 contient des valeurs de luminance appartenant à deux images successives. La gestion de cette mémoire est décrite un peut plus loin. Il est à noter que le codage et la transmission, comme dans les variantes précédentes, sont faits ligne par ligne sans tenir compte des trames d'analyse. A la réception, la mémoire 11 est une mémoire dont la capacité correspond à une image, de façon à pouvoir reconstituer les deux trames par une lecture des valeurs décodées correspondant aux lignes impaires, puis une lecture des valeurs décodées correspondant aux lignes paires. La vitesse de transmission est imposée par la vitesse d'analyse et de visualisation de l'image, l'intérêt du système selon l'invention est donc de réduire la quantité des informations transmises.

Le codage de la deuxième ligne d'une image (première ligne de la deuxième trame) ne peut commencer qu'après la fin de l'analyse et de la mémorisation de toute la première trame. Dans le cas

6

de la transmission d'une séquence d'images, il serait gênant d'avoir un temps mort, sans codage ni transmission pendant la mémorisation de la première trame de chaque image. Ceci peut être évité, simplement, de la façon suivante: Pour l'image n° 1, seulement, les valeurs de luminance de la première trame sont mémorisées sans qu'il y ait de traitement, c'est un temps mort. En même temps que commence la mémorisation des valeurs de luminance de la première ligne de la deuxième trame, commence le traitement (codage et transmission). A l'instant où la valeur de la luminance du dernier point de la deuxième trame de l'image n° 1 est mémorisée, le traitement n'a été effectué que pour la moitié de l'image (une moitié de la première trame et une moitié de la deuxième trame). Pendant le traitement de la deuxième moitié de l'image n° 1, les valeurs de luminance de la première trame de l'image n° 2 sont mémorisées. Les valeurs de luminance de ses premières lignes sont inscrites à la place de celles de la première trame de l'image n° 1, qui ont été utilisées et ne le seront plus. Cette inscription se termine à l'instant où est traitée la valeur de luminance de dernier point de la dernière ligne de l'image (dernière ligne de la deuxième trame). Pour pouvoir traiter les valeurs de luminance des derniers points de cette dernière ligne le codeur doit disposer encore des valeurs codées-décodées de la luminance des derniers points de la dernière ligne de la première trame de l'image n° 1. Pour cela l'inscription des valeurs de luminance correspondant aux lignes de la première trame de l'image suivante (n° 2) est retardée un peu par rapport à l'instant où commence le traitement de la deuxième moitié de l'image. Ce retard correspond à au moins deux points si la valeur de la prédiction $P_n$ est fonction des valeurs de luminance $\hat{X}'_n$ et $\hat{X}'_{n-1}$ par exemple. Les moyens classique d'analyse d'images séparent les deux trames d'un intervalle de temps suffisant.

Le dernier point de l'image n° 1 ayant été traité, le traitement de l'image n° 2 commence, sans temps mort notable. Pendant que les valeurs de luminance de la première ligne de l'image n° 2 (première trame) sont traitées, les valeurs de luminance de la première ligne de la deuxième trame sont inscrites en mémoire. Quand les valeurs de luminance de la deuxième trame de l'image n° 2 sont toutes mémorisées le traitement n'a été effectué que pour la première moitié de l'image n° 2. Pendant la deuxième moitié de ce traitement, les valeurs de luminance de la première trame de l'image n° 3 sont mémorisées. La séquence est ensuite répétée indéfiniment.

La gestion de la mémoire d'image 11 du dispositif récepteur est analogue à celle de la mémoire d'image 2 du dispositif transmetteur. Pendant la réception, le décodage, et le stockage des valeurs de luminance de la première moitié de l'image n° 1, aucune de ces valeurs n'est visualisée, car cette moitié d'image ne contient qu'une moitié de la première trame à reconstituer. La visualisation de cette première trame commence au moment où la moitié de l'image n° 1 est en mémoire, et elle finit juste après la réception de la dernière valeur de luminance de l'image n° 1. La visualisation de la deuxième trame de l'image n° 1 est réalisée ensuite simultanément avec le stockage de la première mointié de l'image n° 2, etc ... La séquence se répète ensuite indéfiniment, sans temps mort ni perte d'informations.

## Revendications

1. Procédé de transmission d'une image à débit réduit, consistant à analyser l'image en deux trames, puis à numériser, coder et transmettre chaque valeur de luminance, chaque valeur étant codée par un codage différentiel avec une prédiction dite temporelle intertrames, qui consiste à coder la valeur numérique de la luminance d'un point courant à partir de celle des points voisins appartenant à la même ligne d'une part, et des points voisins appartenant à la ligne immédiatement précédente de l'autre trame de la même image d'autre part; à la réception, chaque valeur étant décodée selon le procédé complémentaire du codage différentiel intertrames, et une image étant visualisée en fonction des valeurs décodées ainsi obtenues; caractérisé en ce que, pour initialiser le codage et le décodage des valeurs de luminance de chaque image, un codage et un décodage différentiel avec une prédiction dite spatiale sont utilisés pour une ou plusieurs lignes au début de chaque image, ce codage consistant à coder la valeur de la luminance d'un point à partir de celle des points précédents sur la même ligne.

2. Procédé de transmission d'une image à débit réduit, consistant à analyser l'image en deux trames, puis à numériser, coder et transmettre chaque valeur de luminance, les valeurs transmises étant codées par un codage différentiel avec une prédiction dite temporelle intertrames, qui consiste à coder la valeur numérique de la luminance d'un point à partir de celle des points voisins appartenant à la même ligne l'une part, et des points voisins appartenant à la ligne immédiatement précédente de l'autre trame de la même image d'autre part; à la réception, les valeurs de luminance étant décodées selon le procédé complémentaire du codage différentiel intertrames, et une image étant visualisée en fonction des valeurs décodées ainsi obtenues; caractérisé en ce que le codage et le décodage des valeurs de luminance de la première ligne de chaque image sont initialisés par une suite prédéterminée de valeurs de luminance, correspondant à une ligne de luminance moyenne, et qui n'est pas transmise.

3. Procédé selon l'une des revendications 1 ou 2, caractérisé en ce qu'il consiste à écrire les valeurs à coder dans une mémoire d'image, ayant une capacité égale à une image; et consistant à les lire, pour les coder et les transmettre, ligne par ligne sans tenir compte de la trame d'analyse à laquelle chaque ligne appartient.

4. Procédé selon l'une des revendications 1, 2 ou 3, caractérisé en ce que, à la réception, les valeurs numériques décodées de la luminance des points de toute une image sont inscrites dans une mémoire, dite mémoire d'image.

5. Procédé selon l'une des revendications 1, 2, 3 ou 4, caractérisé en ce que, à la réception, les valeurs numériques décodées de la luminance des points de l'image sont inscrites dans une mémoire, où elles sont décalées à la cadence de la transmission; et en ce que cette mémoire a une capacité suffisante pour contenir les valeurs numériques utilisées dans le calcul de la prédiction pour le point courant; et en ce que la vitesse de lecture de ces valeurs pour la visualisation est égale à la vitesse de transmission.

6. Système de transmission pour la mise en œuvre du procédé selon la revendication 1, comportant un dispositif transmetteur comportant: des moyens (1) d'analyse en deux trames et de numérisation d'une image, couplés à une mémoire d'image (2); un compresseur d'informations (3) pour coder les valeurs à coder contenues dans la mémoire d'image (2); un expanseur d'informations (5) pour décoder les valeurs codées fournies par le compresseur (3) et inscrire des valeurs codées-décodées dans la mémoire d'image (2) à la place des valeurs à coder correspondantes, des moyens (4) d'adaptation à une ligne de transmission, pour relier la sortie du compresseur (3) à une borne (7) de sortie du dispositif transmetteur;

et comportant un dispositif récepteur comportant: des moyens (9) d'adaptation à la ligne de transmission couplés à une entrée d'un expanseur d'informations (10), dont le fonctionnement est complémentaire de celui du compresseur (3) du dispositif transmetteur; une mémoire (11) pour stocker les données décodées, dont la sortie est couplée à une entrée de moyens de visualisation (12);

caractérisé en ce que le compresseur (3) et les expanseurs (5, 10) d'informations comportent des moyens de calcul de prédiction (14 et 22) fournissant, soit une prédiction spatiale unidimensionnelle soit une prédiction temporelle intertrames, commandés par des moyens de commande (36), selon que la valeur de luminance transmise correspond ou non à un point de la première, ou d'une des premières lignes de chaque image.

7. Système de transmission pour la mise en œuvre du procédé selon la revendication 2, comportant un dispositif transmetteur comportant: des moyens (1) d'analyse en deux trames et de numérisation d'une image, couplés à une mémoire d'image (2); un compresseur d'informations (3) pour coder les valeurs à coder contenues dans la mémoire d'image (2); un expanseur d'informations (5) pour décoder les valeurs codées fournies par le compresseur (3) et inscrire des valeurs codées-décodées dans la mémoire d'image (2) à la place des valeurs à coder correspondantes; des moyens (4) d'adaptation à une ligne de transmission, pour relier la sortie du compresseur (3) à une borne (7) de sortie du dispositif transmetteur;

et comportant un dispositif récepteur comportant: des moyens (9) d'adaptation à la ligne de transmission couplés à une entrée d'un expanseur d'informations (10), dont le fonctionnement est complémentaire de celui du compresseur (3) du dispositif transmetteur; une mémoire (11) pour stocker les données décodées, dont une sortie est couplée à une entrée de moyens de visualisation (12),

caractérisé en ce que le compresseur (3) et les expanseurs (5, 10) d'informations comportent des moyens de calcul de prédiction (14 et 22) fournissant une prédiction temporelle intertrames calculée soit à partir des valeurs stockées dans la mémoire d'image (2 ou 11) du dispositif transmetteur et du dispositif récepteur respectivement, soit à partir d'une suite donnée de valeurs de luminance correspondant à une ligne de luminance moyenne, et des moyens de commande (36) pour commander ces moyens de calcul de prédiction (14 et 22), selon que la valeur de luminance transmise correspond ou non à un point de la première ligne de chaque image.

8. Système de transmission selon l'une des revendications 6 ou 7, caractérisé en ce que la mémoire (11) du dispositif récepteur comporte une mémoire à décalage pour stocker les valeurs numériques décodées fournies par l'expanseur (10) en les décalant à la cadence de transmission, et ayant une capacité suffisante pour conserver les valeurs numériques décodées de la luminance des points voisins servant à calculer la valeur de la prédiction pour le point courant; des moyens de visualisation (12) permettant de restituer l'image à partir des valeurs numériques décodées de la luminance des points, au fur et à mesure de leur décodage.

9. Système des transmission selon l'une des revendications 6 ou 7, caractérisé en ce que la mémoire d'image (11) du dispositif récepteur comporte une mémoire (11) ayant une capacité égale à une image; et en ce que les moyens de visualisation (12) fournissent des images constituées chacune de deux trames, ces deux trames étant visualisées successivement par une lecture des valeurs de luminance dans la mémoire (11).

10. Système de transmission selon l'une quelconque des revendications 6 à 9, caractérisé en ce que le dispositif transmetteur comporte des moyens de visualisation (6) pour reconstituer une image à partir des valeurs numériques codées-décodées de luminance, stockées dans la mémoire d'image (2) du dispositif transmetteur.

# 0 063 990

**Patentansprüche**

1. Verfahren zur Übertragung eines Bildes bei vermindertem Durchsatz, welches darin besteht, daß das Bild in zwei Halbbildern analysiert wird und anschließend jeder Luminanzwert digitalisiert, codiert und übertragen wird, wobei jeder Wert mittels differentieller Codierung und mit sogenannter zeitlicher Zwischen-Halbbild-Vorhersage codiert wird, die darin besteht, daß der Digitalwert der Luminanz eines laufenden Punktes einerseits ausgehend von der Luminanz der zur selben Zeile gehörenden Nachbarpunkte und andererseits ausgehend von Nachbarpunkten codiert wird, welche zu der unmittelbar vorausgehenden Zeile des anderen Halbbildes desselben Bildes gehören; wobei empfangsseitig jeder Wert nach dem komplementären Verfahren der differentiellen Zwischen-Halbbild-Codierung decodiert wird und ein Bild in Abhängigkeit von den so erhaltenen decodierten Werten dargestellt wird; dadurch gekennzeichnet, daß zum Initiieren der Codierung und der Decodierung der Luminanzwerte jedes Bildes eine differentielle Codierung und Decodierung mit sogenannter räumlicher Vorhersage für eine oder mehrere Zeilen am Anfang jedes Bildes angewendet werden, wobei diese Codierung darin besteht, daß der Luminanzwert eines Punktes ausgehend von dem der in derselben Zeile vorausgehenden Punkte codiert wird.

2. Verfahren zur Übertragung eines Bildes bei vermindertem Durchsatz, welches darin besteht, das Bild in zwei Halbbildern zu analysieren und anschließend jeden Luminanzwert zu codieren und zu übertragen, wobei die übertragenen Werte mittels differentieller Codierung und mit sogenannter zeitlicher Zwischen-Halbbild-Vorhersage codiert werden, die darin besteht, den Digitalwert der Luminanzwerte eines Punktes einerseits ausgehend von der Luminanz der zu derselben Zeile gehörenden Nachbarpunkte und andererseits ausgehend von der Luminanz der Nachbarpunkte zu codieren, welche zu der unmittelbar vorausgehenden Zeile des anderen Halbbildes desselben Bildes gehören; wobei empfangsseitig die Luminanzwerte nach dem komplementären Verfahren der differentiellen Zwischenhalbbild-Codierung decodiert werden und ein Bild in Abhängigkeit von den so erhaltenen decodierten Werten dargestellt wird; dadurch gekennzeichnet, daß die Codierung und Decodierung der Luminanzwerte der ersten Zeile jedes Bildes initialisiert werden durch eine vorbestimmte Folge von Luminanzwerten, welche einer Zeile mittlerer Luminanz entsprechen, die nicht übertragen wird.

3. Verfahren nach Anspruch 1 oder 2, dadurch gekennzeichnet, daß es darin besteht, die zu codierenden Werte in einen Bildspeicher einzuschreiben, der ein einem Bild entsprechendes Fassungsvermögen aufweist, und darin besteht, sie auszulesen, um sie zu codieren und Zeile für Zeile zu übertragen, ohne Berücksichtigung des Analyse-Halbbildes, zu welchem jede Zeile gehört.

4. Verfahren nach einem der Ansprüche 1, 2 und 3, dadurch gekennzeichnet, daß empfangsseitig die digitalen decodierten Luminanzwerte der Punkte eines ganzen Bildes in einem Speicher eingeschrieben werden, der als Bildspeicher bezeichnet wird.

5. Verfahren nach einem der Ansprüche 1, 2, 3 und 4, dadurch gekennzeichnet, daß empfangsseitig die decodierten digitalen Luminanzwerte der Bildpunkte in einen Speicher eingeschrieben werden, wo sie im Rhythmus der Übertragung verschoben werden; und daß dieser Speicher ein ausreichendes Fassungsvermögen aufweist, um die Digitalwerte zu enthalten, welche bei der Berechnung der Vorhersage für den laufenden Punkt verwendet werden; und daß die Lesegeschwindigkeit beim Auslesen dieser Werte für die Sichtanzeige gleich der Übertragungsgeschwindigkeit ist.

6. Übertragungssystem zur Durchführung des Verfahrens nach Anspruch 1, mit einer Übertragungsvorrichtung, enthaltend: Mittel (1) zur Analyse eines Bildes in zwei Halbbildern und zur Digitalisierung des Bildes, die an einen Bildspeicher (2) angekoppelt sind; einen Informationskompressor (3) zum Codieren der zu codierenden Werte, die in dem Bildspeicher (2) enthalten sind; einen Informationsexpander (5) zum Decodieren der vom Kompressor (3) gelieferten codierten Werte und Einschreiben dieser codierten-decodierten Werte in den Bildspeicher (2) an der Stelle der entsprechenden zu codierenden Werte; Mittel (4) zur Anpassung an eine Übertragungsleitung, um den Ausgang des Kompressors (3) mit einem Ausgangsanschluß (7) der Übertragungsvorrichtung zu verbinden; und versehen mit einer Empfängervorrichtung, enthaltend: Mittel (9) zur Anpassung an die Übertragungsleitung, welche an einen Eingang eines Informationsexpanders (10) angekoppelt sind, dessen Arbeitsweise komplementär zu der des Kompressors (3) der Übertragungsvorrichtung ist; einen Speicher (11) zum Speichern der decodierten Daten, dessen Ausgang mit einem Eingang von Sichtdarstellungsmitteln (12) verbunden ist; dadurch gekennzeichnet, daß der Kompressor (3) und die Informationsexpander (5, 10) Vorhersage-Berechnungsmittel (14 und 22) umfassen, welche entweder eine eindimensionale räumliche Vorhersage oder aber eine zeitliche Zwischen-Halbbild-Vorhersage liefern und durch Steuermittel (36) gesteuert sind, je nachdem, ob der übertragene Luminanzwert einem Punkt der ersten oder einer der ersten Zeilen jedes Bildes entspricht oder nicht.

7. Übertragungssystem durch Durchführung des Verfahrens nach Anspruch 2, mit einer Übertragungsvorrichtung, die versehen ist mit: Mitteln (1) zur Analyse eines Bildes in zwei Halbbildern und zur Digitalisierung des Bildes, welche an einen Bildspeicher (2) angekoppelt sind; einem Informationskompressor (3) zum Codieren der zu codierenden Werte, die in dem Bildspeicher (2) enthalten sind; einem Informationsexpander (5) zum Decodieren der codierten Werte, welche von dem Kompressor (3) geliefert werden, und zum Einschreiben der codierten-decodierten Werte in den Bildspeicher (2) an der Stelle der entsprechenden zu codierenden Werte; Mitteln (4) zur Anpassung an eine Übertragungsleitung, um den Ausgang des Kompressors (3) mit einem Ausgangsanschluß (7) der Übertragungsvorrichtung zu verbinden;
und mit einer Empfängervorrichtung, die versehen ist mit: Mitteln (9) zur Anpassung an die Übertragungsleitung, welche an einen Eingang eines Informationsexpanders (10) angekoppelt sind, dessen Betriebsweise komplementär zu der des Kompressors (3) der Übertragungsvorrichtung ist; einem Speicher (11) zum Speichern der decodierten Daten, wovon ein Ausgang an einen Eingang von Sichtdarstellungsmitteln (12) angekoppelt ist,
dadurch gekennzeichnet, daß der Kompressor (3) und die Informationsexpander (5, 10) Vorhersage-Berechnungsmittel (14 und 22) umfassen, die eine zeitliche Zwischenhalbbild-Vorhersage liefern, die berechnet wird entweder ausgehend von Werten, die in dem Bildspeicher (2 oder 11) der Übertragungsvorrichtung bzw. der Empfängervorrichtung gespeichert sind, oder ausgehend von einer Folge von Luminanzdatenwerten, welche einer Zeile mittlerer Luminanz entsprechen, und Steuermittel (36) enthalten, um diese Vorhersage-Berechnungsmittel (14 und 22) zu steuern, je nachdem, ob der übertragene Luminanzwert einem Punkt der ersten Zeile jedes Bildes entspricht oder nicht.

8. Übertragungssystem nach einem der Ansprüche 6 und 7, dadurch gekennzeichnet, daß der Speicher (11) der Empfängervorrichtung einen Schiebespeicher umfaßt, um die decodierten, von dem Expander (10) gelieferten Digitalwerte zu speichern, indem sie im Übertragungsrhythmus verschoben werden, und der ein ausreichendes Fassungsvermögen aufweist, um die decodierten digitalen Luminanzwerte der Nachbarpunkte aufzubewahren, die zur Berechnung des Wertes der Vorhersage für den laufenden Punkt dienen; wobei Sichtanzeigemittel (12) es ermöglichen, das Bild ausgehend von den decodierten Digitalwerten für die Luminanz der Punkte mit fortschreitender Decodierung derselben zu reproduzieren.

9. Übertragungssystem nach Anspruch 6 oder 7, dadurch gekennzeichnet, daß der Bildspeicher (11) der Übertragungsvorrichtung einen Speicher (11) umfaßt, der ein einem Bild entsprechendes Fassungsvermögen aufweist; und daß die Sichtanzeigemittel (12) Bilder liefern, die jeweils aus zwei Halbbildern bestehen, wobei diese zwei Halbbilder nacheinander dargestellt werden, indem die Luminanzwerte aus dem Speicher (11) ausgelesen werden.

10. Übertragungssystem nach einem der Ansprüche 6 bis 9, dadurch gekennzeichnet, daß die Übertragungsvorrichtung Sichtanzeigemittel (6) zur Rekonstruktion eines Bildes ausgehend von digitalen codierten-decodierten Luminanzwerten enthält, die in dem Bildspeicher (2) der Übertragungsvorrichtung gespeichert sind.

**Claims**

1. Reduced rate image transmission method consisting in analyzing the image into two frames and in digitalizing, coding and transmitting each luminance value, each value being coded by differential coding with so-called temporal interframe prediction consisting in coding the digital value of the luminance of a current point on the one hand from that of neighboring points belonging to the same line and, on the other hand, neighboring points belonging to the immediately preceding line of the other frame of the same image; each value being decoded upon reception in accordance with the complementary method of differential interframe coding, and an image being visualized in function of the thus obtained decoded values; characterized in that, to initialize the coding and decoding of the luminance values of each image, a differential coding and decoding with so-called spatial prediction are used for one or a plurality of lines at the beginning of each image, the coding consisting in coding the luminance value of a point from that of the preceding points in the same line.

2. Reduced rate image transmission method consisting in analyzing the image into two frames and digitalizing, coding and transmitting each luminance value, the transmitted values being coded by a differential coding with so-called temporal interframe prediction consisting in coding the digital luminance value of a point on the one hand from that of neighboring points belonging to the same line and, on the other hand, from neighboring points belonging to the immediately preceding line of the other frame of the same image; the luminance values being decoded upon reception in accordance with the complementary method of differential interframe coding, and an image being visualized in function of the thus obtained decoded values; characterized in that the coding and the decoding of the luminance values of the first line of each image are initialized by a predetermined sequence of luminance values corresponding to a line of mean luminance which is not transmitted.

3. Method according to any of claims 1 and 2, characterized in that it consists in writing the values to be coded into an image memory having a capacity corresponding to an image; and consisting in reading them to be coded and transmitted line per line without regard to the analysis frame whereto each line belongs.

4. Method according to any of claims 1, 2 and 3, characterized in that the decoded digital luminance values of the points of an entire image are written into a so-called image memory upon reception.

5. Method according to any of claims 1, 2, 3 and 4, characterized in that the decoded digital luminance values of the image points are written into a memory upon reception where they are shifted at the rhythm of transmission; and in that this memory has a sufficient capacity for containing the digital values used in the computation of the prediction for the current point; and in that the speed of reading these values for visualization is equal to the transmission speed.

6. Transmission system for performing the method according to claim 1, comprising a transmitter device including: means (1) for analyzing and digitalizing an image into two frames which are coupled to an image memory (2); an information compressor (3) for coding the values to be coded contained in the image memory (2); an information expander (5) for decoding the coded values supplied by the compressor (3) and writing the coded-decoded values into the image memory (2) in place of the corresponding coded values; means (4) for adaptation to a transmission line for connecting the output of the compressor (3) to an output terminal (7) of the transmitter device;

and comprising a receiver device including: means (9) for adaptation to a transmission line coupled to an input of an information expander (10) the operation of which is complementary to that of the compressor (3) of the transmitter device; a memory (11) for storing the decoded data the output of which is coupled to an input of visualization means (12);

characterized in that the compressor (3) and the information expanders (5, 10) comprise prediction computation means (14 an 22) supplying either a unidimensional spatial prediction of a temporal interframe prediction, controlled by controlling means (36), depending on whether or not the transmitted luminance value corresponds to a point of the first or one of the first lines of each image.

7. Transmission system for performing the method according to claim 2, comprising a transmitter device including: means (1) for analyzing and digitalizing an image into two frames, coupled to an image memory (2); an information compressor (3) for coding the values to be coded contained in the image memory (2); an information expander (5) for decoding the coded values supplied by the compressor (3) and writing the coded-decoded values into the image memory (2) in place of the corresponding values to be coded; means (4) for adaptation to a transmission line for connecting the output of the compressor (3) to an output terminal (7) of the transmitter device;

and comprising a receiver device including: means (9) for adaptation to the transmission line coupled to an input of an information expander (10) the operation of which is complementary to that of the compressor (3) of the transmitter device; a memory (11) for storing the decoded data an output of which is coupled to an input of visualization means (12),

characterized in that the compressor (3) and the information expanders (5, 10) comprise prediction computation means (14 and 22) supplying a temporal interframe prediction computed either from the values stored in the image memory (2 or 11) of the transmitter device and of the receiver device, respectively, or from a given sequence of luminance values corresponding to a line of mean luminance, and control means (36) for controlling these prediction computation means (14 and 22) according to whether or not the transmitted luminance value corresponds to a point of the first line of each image.

8. Transmission system according to any of claims 6 and 7, characterized in that the memory (11) of the receiver device comprises a shift memory for storing the decoded digital values supplied by the expander (10) by shifting them at the rhythm of transmission, and having a sufficient capacity for maintaining the decoded digital luminance values of the neighboring points used in the computation of the prediction value for the current point; visualization means (12) permitting the restitution of the image from the decoded digital luminance values of the points at the rate of their decoding.

9. Transmission system according to claims 6 or 7, characterized in that the image memory (11) of the receiver device comprises a memory (11) having a capacity equal to an image; and in that the visualization means (12) provide images which are each formed of two frames, these two frames being successively visualized by reading the luminance values from the memory.

10. Transmission system according to any of claims 6 to 9, characterized in that the transmitter device comprises visualization means (6) for the restitution of an image from digital coded-decoded luminance values stored in the image memory (2) of the transmitter device.

FIG. 1

$$\boxed{\text{FIE}}.\ 2$$

$$\boxed{\text{FIE}}.\ 3$$

0 063 990

Fig. 4

MOYENS DE COMMANDE — 36

$Pn_2 = \emptyset_2(\hat{X}_{n-3}, \hat{X}_{n-2}, \hat{X}_{n-1}, X'_{n-1}, X'_n, X'_{n+1})$ — 35

$Pn_1 = \emptyset_1(\hat{X}_{n-3}, \hat{X}_{n-2}, \hat{X}_{n-1})$ — 34

MEMOIRE 31
MEMOIRE 30
MEMOIRE 29
MEMOIRE 28
MEMOIRE 27
MEMOIRE 26

$X'_n$  $X'_{n+1}$  $X'_{n-1}$

$\hat{X}_{n-3}$  $\hat{X}_{n-2}$  $\hat{X}_{n-1}$

$Pn_2$  $Pn_1$

37  17  25  33  32